(19) Europäisches Patentamt
European Patent Office
Office européen des brevets

(11) **EP 1 989 462 B1**

(12) **EUROPÄISCHE PATENTSCHRIFT**

(45) Veröffentlichungstag und Bekanntmachung des Hinweises auf die Patenterteilung:
**15.09.2010   Patentblatt 2010/37**

(21) Anmeldenummer: 07703909.7

(22) Anmeldetag: **16.01.2007**

(51) Int Cl.:
*F16D 48/06* (2006.01)      *F16H 61/688* (2006.01)

(86) Internationale Anmeldenummer:
**PCT/EP2007/050394**

(87) Internationale Veröffentlichungsnummer:
**WO 2007/096212 (30.08.2007 Gazette 2007/35)**

(54) **DOPPELKUPPLUNG FÜR EIN DOPPELKUPPLUNGSGETRIEBE**

DOUBLE CLUTCH FOR A DOUBLE CLUTCH TRANSMISSION

DOUBLE EMBRAYAGES POUR UNE TRANSMISSION À DOUBLE EMBRAYAGES

(84) Benannte Vertragsstaaten:
**DE FR**

(30) Priorität: **22.02.2006   DE 102006008226**

(43) Veröffentlichungstag der Anmeldung:
**12.11.2008   Patentblatt 2008/46**

(73) Patentinhaber: **Robert Bosch GmbH
70442 Stuttgart (DE)**

(72) Erfinder: **TUMBACK, Stefan
70469 Stuttgart (DE)**

(56) Entgegenhaltungen:
**EP-A- 1 369 613          DE-A1- 10 313 435
DE-A1- 10 316 419          FR-A1- 2 810 708
US-A1- 2005 205 376**

**Beschreibung**

Stand der Technik

Zum Antrieb von Fahrzeugen eingesetzte Doppelkupplungsgetriebe, die zwei Teilgetriebe umfassen, die jeweils eine Hauptkupplung aufweisen, sind aus dem Stande der Technik bekannt. Die erwähnten Hauptkupplungen werden mittels einer hydraulischen Aktuatorik betätigt. Daneben ist es bekannt, Kupplungen mittels elektrischer Steller, wie z. B. Elektromotoren und einer diesen zugeordneten geeigneten Kinematik zu betätigen. Es wird jeweils eine Kupplung von einem Motor mit einer entsprechend ausgelegten zugeordneten Kinematik unabhängig von der anderen betätigt.

Aus DE 199 03 554 C2 ist ein Kraftfahrzeug-Antriebsstrang und ein Verfahren zu dessen Steuerung bekannt. Der Kraftfahrzeug-Antriebsstrang umfasst eine elektronische Steuereinrichtung, einen Variator und mindestens eine reibschlüssige Kupplung. Der Variator weist ein endloses Antriebselement, welches um zwei Antriebsräder geschlungen ist zur stufenlos einstellbaren Antriebsübersetzung, auf. Das endlose Antriebselement ist mit den beiden Antriebsrädern in reibschlüssigem Kontakt, wobei die Steuereinrichtung derart ausgebildet ist, dass der Sicherheitsfaktor gegen rutschende Kupplungen ständig so weit niedriger gehalten wird, als der Sicherheitsfaktor des Variators gegen Rutschen des endlosen Antriebselements relativ zu seinen Antriebsrädern. Bei einem von der Abtriebsseite des Antriebsstranges her in den Antriebsstrang wirkenden Drehmoment geht je nach dessen Wert entweder weder die Kupplung noch der Variator oder nur die Kupplung in Rutschbetrieb, jedoch nie der Variator. Eine Adaption des Schließdruckes der Kupplung erfolgt an sich im Laufe der Zeit ändernde Reibwerte der Reibschlusselemente in vorbestimmten Perioden. Durch die Steuereinrichtung wird vor jeder Adaption des Kupplungsschließdruckes an die Reibwerte der Reibschlusselemente der Kupplung automatisch überprüft, ob für die Durchführung einer solchen Adaption vorbestimmte Betriebszustände vorhanden sind und diese Adaption jeweils nur dann durchgeführt wird, wenn die vorbestimmten Betriebszustände vorliegen.

US 6,292,732 B1 bezieht sich auf ein Verfahren zur Regelung des Füllstandes einer schließenden Kupplung von Automatikgetrieben. Um den richtigen Zeitpunkt zum Schließen der Kupplung zu bestimmen, wird das zugegebene Hydraulikflüssigkeitsvolumen ermittelt und mit einem Refererenzvolumen verglichen. Bei unsauberen Schaltvorgängen kann während des Schaltens das Referenzvolumen neu eingestellt werden. In die Ermittlung des Volumenstromes zur Befüllung der schließenden Kupplung des Automatikgetriebes gehen die Pumpendrehzahl die Art des Schaltvorganges, die Hydraulikflüssigkeitstemperatur und der Fülldruck ein.

Bei den eingangs erwähnten mittels Elektromotoren betätigbaren Kupplungen werden die Elektromotoren nicht nur zum Schließen, sondern auch zum Geschlossenhalten der Kupplungen ständig bestromt. Die Folge ist eine entsprechende Dimensionierung der Elektromotoren sowie die erforderliche Leistungselektronik. Durch die aus dem Stand der Technik bekannten elektromotorisch gesteuerten Kupplungen muss gewährleistet sein, dass jede der beiden Kupplungen des Doppelkupplungsgetriebes von je einem Elektromotor unabhängig voneinander vollständig geschlossen werden kann. Dazu muss jeder der beiden vorzuhaltenden Elektromotoren die volle Schließkraft aufbringen können, was entsprechend leistungsfähige und damit teure Elektromotoren erforderlich macht. Im Fehlerfall öffnen die beiden Kupplungen, die jeweils elektromotorisch betrieben werden, so dass das Schleppmoment der Verbrennungskraftmaschine nicht mehr zur Verfügung steht und die Motorbremse unwirksam ist. So wird zwar einerseits ein Blockieren des Getriebes verhindert, jedoch andererseits die Motorbremse ausgeschaltet.

Aus der Gattungsbildenden US 2005/02053 76 A1 ist ein Betätigungsvorrichtung-System umfassend eine Kugel Rampe und einen Motor für ein Doppelkupplungsgetriebe bekannt.

Offenbarung der Erfindung

Der Erfindung liegt die Aufgabe zugrunde, eine elektromotorisch betätigte Doppelkupplung bereitzustellen, deren Betätigung einerseits vereinfacht ist und deren Betätigung insbesondere nur geringe Stellkräfte erfordert.

Dazu wird vorgeschlagen, eine Doppelkupplung mit einem ersten Elektromotor und einem zweiten Elektromotor auszustatten. Die erfindungsgemäß vorgeschlagene Doppelkupplung umfasst einen Kurvenkörper; auf dem für jede der beiden zu betätigenden Kupplungen jeweils eine Erhebungskurve aufgebracht ist. Um die Flächenpressung, die auf diese Erhebungskurven wirkt, zu reduzieren, ist jede der beiden Erhebungskurven in mehrere identisch ausgebildete Segmente unterteilt. Jedes der Kurvensegmente bildet eine Lauffläche für ein Kontaktelement zur jeweiligen Kupplungsfeder, die jeweils in Wirkverbindung zur zugeordneten Kupplung steht.

Über den Verlauf der Erhebungen auf den Erhebungskurven werden die Stellungen der Kupplungsfedern und dadurch die Kräfte an den Kupplungen mittels des Kurvenkörpers gesteuert. Der Kurvenkörper der Doppelkupplung wird durch einen der beiden Elektromotoren verdreht und steuert somit einen Umkuppelvorgang. Der einen Umkuppelvorgang steuernde Elektromotor ist derart mit dem Kurvenkörper gekoppelt, dass in den Endstellungen des Verfahrweges des Kurvenkörpers jeweils eine Kupplung geschlossen ist, während die andere Kupplung geöffnet steht. Wird nur der erste, den Umkuppelvorgang steuernde Elektromotor angefahren, so wird von einer Kupplung auf die andere umgekuppelt. Die Überschneidung der Kupplungen erfolgt nach einem vorgegebenen Ablauf, wobei der Ablauf abhängig vom Fahrzustand durch Betätigung beider Elektromotoren eingestellt werden kann. Während eines Umkuppelvorgangs öffnet eine Kupplung, während die andere schließt.

Der Doppelkupplung ist darüber hinaus der zweite Elektromotor zugeordnet, durch welchen dem Kurvenkörper eine Translationsbewegung aufgeprägt wird. Durch die mittels des zweiten Elektromotors dem Kurvenkörper aufgeprägte Translationsbewegung werden gleichermaßen die Positionen der Kupplungsfedern beider Kupplungen variiert. Durch die Positionen der Kupplungsfedern werden die Betätigungskräfte an den beiden Kupplungen beeinflusst. Mittels des die Translationsbewegung steuernden zweiten Elektromotors wird das insgesamt über die Doppelkupplung übertragbare Drehmoment gesteuert. Es werden demnach die Positionen der Kupplungsfedern und somit die Kupplungskräfte optimal an Vollast- oder Teillastbetrieb angepasst. Erforderlichenfalls kann mit dem zweiten Elektromotor eine Schlupfregelung der jeweils geschlossenen Kupplung der beiden Kupplungen der Doppelkupplung durchgeführt werden. Darüber hinaus wird mit dem zweiten Elektromotor auch der Anfahrvorgang gesteuert oder geregelt. Durch eine gemeinsame Ansteuerung beider Elektromotoren der Doppelkupplung während des Umkuppelvorgangs lässt sich abweichend vom vorgegebenen Ablauf des Umkuppelvorgangs der Kupplungen ein modifizierter, frei wählbarer Ablauf des Umkuppelvorganges einstellen. Damit lässt sich eine vom Fahrzustand des Fahrzeugs abhängige Optimietung des Ablaufs des Umkuppelvorgangs erreichen.

Bei der erfindungsgemäß vorgeschlagenen mittels zweier Elektromotoren betätigten Doppelkupplung ergibt sich ein Vorteil dahingehend, dass derjenige der Elektromotoren, der den Umkuppelvorgang steuert, hinsichtlich der durch diesen aufzubringenden erforderlichen Leistung kleiner dimensioniert werden kann. Ferner entfällt bei der erfindungsgemäß vorgeschlagenen Doppelkupplung die Notwendigkeit einer Dauerbestromung beider Elektromotoren. Dies ist hinsichtlich der gegebenenfalls erforderlichen Leistungselektronik sowie der Dimensionierung der beiden Elektromotoren von Vorteil. Ferner kann durch die erfindungsgemäß vorgeschlagene Lösung der Doppelkupplung sichergestellt werden, dass hinsichtlich des Sicherheitsaspektes "Motor Bremse" diese bei Systemausfall weiterhin wirksam ist. Darüber hinaus stellt die erfindungsgemäße Anordnung sicher, dass durch eine Fehlfunktion der Steuerung niemals beide Kupplungen des Doppelkupplungsgetriebes vollständig geschlossen sind und das Getriebe beschädigt werden kann.

Zeichnung

Anhand der Zeichnung wird die Erfindung nachstehend eingehender beschrieben. Es zeigt:

Figur 1    einen Schnitt durch die erfindungsgemäß vorgeschlagene Doppelkupplung,
Figur 2.1   eine Seitenansicht des Kurvenkörpers mit Erhebungskurven,
Figur 2.2   eine Draufsicht auf den Kurvenkörper gemäß der Darstellung in Figur 2.1, bei dem die Erhebungskurven für die jeweiligen Kupplungen in Kurvenseg- mente unterteilt sind,
Figur 3    den exemplarischen Verlauf der Betätigungskraft $F_B$ einer Kupplung über den Betätigungsweg $s_B$ der Kupplungsfeder,
Figur 4    eine Variante des Verlaufs des Drehmomentes am den Umkupplungsvorgang erzeugenden Elektromotor.
Figur 5    die Verläufe von Kupplungskraft und Aktorkraft, jeweils aufgetragen über der translatorischen Position des Kurvenkörpers und
Figur 6    den Betätigungsweg der den beiden Kupplungen zugeordneten Kupplungs- federn, aufgetragen über den Drehwinkel des Elektromotors, der für den Umkupplungsvorgang eingesetzt wird.

Ausführungsbeispiele

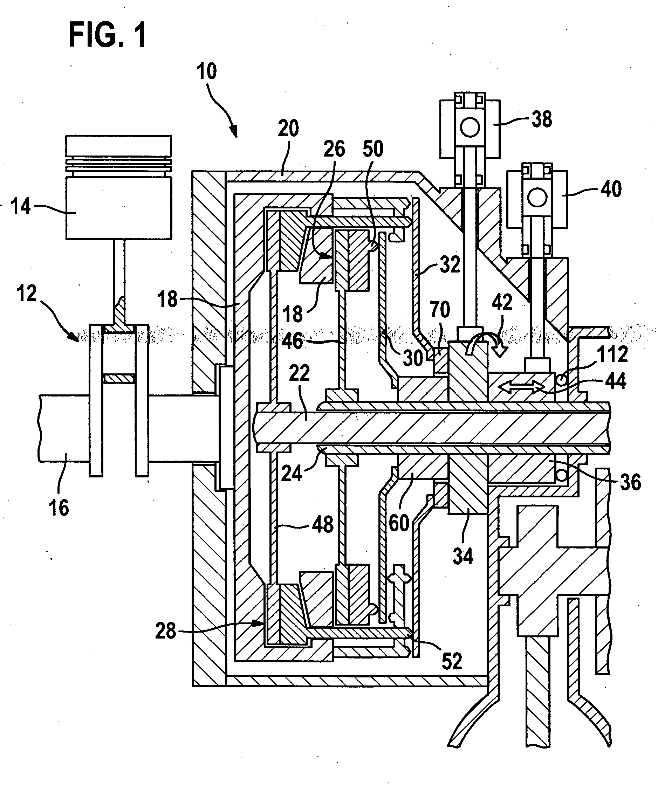

Der Darstellung gemäß Figur 1 ist ein schematischer Schnitt durch die erfindungsgemäße Doppelkupplung zu entnehmen.

Ein Doppelkupplungsgetriebe, zwei Teilgetriebe umfassend, denen je eine Kupplung zugeordnet ist, überträgt das in einer Verbrennungskraftmaschine 12 erzeugte Drehmoment auf eine Antriebswelle 22 des ersten Teilgetriebes beziehungsweise eine die Antriebswelle 22 umgebende Antriebswelle 24 des zweiten Teilgetriebes. Bei der Verbrennungskraftmaschine handelt es sich in der Regel um eine mehrzylindrige Verbrennungskraftmaschine, sei es ein Selbstzünder oder eine fremdgezündete Verbrennungskraftmaschine, hier angedeutet durch einen Kolben 14, dessen Vertikalbewegung mittels einer Kurbelwelle 16 in eine Rotationsbewegung umgewandelt wird. Die Rotationsbewegung der Kurbelwele 16 der Verbrennungskraftmaschine 12 wird an einen Kupplungsblock 18 der Doppelkupplung 10 übertragen, der von einem Gehäuse 20 umgeben ist.

Innerhalb des Gehäuses 20 des Doppelkupplungsgetriebes 10 befinden sich eine erste Kupplung 26 sowie eine zweite Kupplung 28 einer Doppelkupplung 10. Die erste Kupplung 26 ist innenliegend angeordnet, während die zweite Kupplung 28 außenliegend angeordnet ist. Beide Kupplungen 26, 28 der Doppelkupplung 10 sind demnach konzentrisch zueinander innerhalb des Gehäuses 20 des Doppelkupplungsgetriebes aufgenommen. Es können auch gleichgroße Kupplungen zum Einsatz kommen.

Der ersten Kupplung 26 ist eine erste Kupplungsfeder 30 zugeordnet, während die zweite Kupplung 28 über eine zweite Kupplungsfeder 32 beaufschlagt ist.

Die erste Kupplungsfeder 30 beaufschlagt ein Auflager 50 der ersten Kupplung 26, die sich ihrerseits am Kupplungsblock 18 abstützt. Von dieser unabhängig drückt die zweite Kupplungsfeder 32 auf ein Auflager 52 der zweiten Kupplung 28. Der Kupplungsblock 18 des Doppelkupplungsgetriebes wird demnach von beiden Kupplungen 26, 28 der Doppelkupplung 10 im geschlossenen Zustand beaufschlagt.

Der Vollständigkeit halber sei erwähnt, dass die erste Kupplung 26 eine erste Kupplungsscheibe 46 umfasst und die zweite Kupplung 28 eine zweite Kupplungsscheibe 48 aufweist. Die zweite Kupplungsscheibe 48 der zweiten außenliegenden Kupplung 28 ist, wie aus Figur 1 hervorgeht, vom Kupplungsblock 18 umschlossen.

Zur Betätigung der beiden Kupplungen 26, 28 sind ein erster elektrischer Antrieb 38 sowie ein zweiter elektrischer Antrieb 40 vorgesehen. Der in Figur 1 dargestellte Kurvenkörper 34 wird durch den ersten elektrischen Antrieb 38 rotatorisch (vergleiche Pfeil 42) um die Achse der Antriebswellen 22, 24 in beide Drehrichtungen bewegt. Mittels des ersten elektrischen Antriebes 38 wird abhängig vom Verlauf der Erhebungskurven 60, 70 am Kurvenkörper 34 der Umkuppelvorgang zwischen der ersten Kupplung 26 und der zweiten Kupplung 28 gesteuert. Über z. B. kugelförmig ausgebildete Übertragungselemente stehen die erste Kupplungsfeder 30 mit einer ersten Erhebungskurve 60 und die zweite Kupplungsfeder 32 mit einer weiteren zweiten Erhebungskurve 70 am Kurvenkörper 34 in Kontakt. Wird der für einen Umkuppelvorgang vorgesehene erste elektrische Antrieb 38 betätigt, verdreht sich der Kurvenkörper 34 entsprechend des durch den Pfeil 42 angedeuteten Drehweges, wodurch die erste Erhebungskurve 60 und die zweite Erhebungskurve 70 rotatorisch verstellt werden. Da auf den in Figur 1 nicht dargestellten Laufflächen der ersten Erhebungskurve 60 beziehungsweise der zweiten Erhebungskurve 70 die erwähnten, z. B. kugelförmig ausgebildeten Übertragungselemente der ersten Kupplungsfeder 30 beziehungsweise der zweiten Kupplungsfeder 32 laufen, wird durch eine Verdrehbewegung des Kurvenkörpers 34 die Vorspannkraft, die auf die erste Kupplung 26 und auf die zweite Kupplung 28 wirkt, verändert.

Über die Rotation des Kurvenkörpers 34 werden somit die Positionen der jeweiligen Kupplungsfedern 30 beziehungsweise 32 beeinflusst und damit die Kupplungskraft $F_K$ an den Kupplungen 26 beziehungsweise 28. Während die rotatorische Verstellung des Kurvenkörpers 34 durch den ersten elektrischen Antrieb 38 erfolgt und somit ein Umkupplungsvorgang zwischen der ersten Kupplung 26 und der zweiten Kupplung 28 gesteuert wird, erfolgt bei einer Betätigung des weiteren, zweiten elektrischen Antriebes 40 eine Translationsbewegung entsprechend des Doppelpfeiles 44 einer Hülse 36. Die Hülse 36 ist zumindest in Bezug auf die Translationsbewegung fest mit dem Kurvenkörper 34 gekoppelt. Wird der weitere, zweite elektrische Antrieb 40 angesteuert, so wird über die Translationsbewegung 44 der Hülse 36 der Kurvenkörper 34 mit den daran ausgebildeten Erhebungskurven 60 beziehungsweise 70 in translatorische Richtung verstellt. Dies beeinflusst gleichermaßen die Positionen der ersten Kupplungsfeder 30 und der zweiten Kupplungsfeder 32 und damit ebenfalls die Betätigungskräfte an beiden Kupplungen 26 beziehungsweise 28 der Doppelkupplung 10.

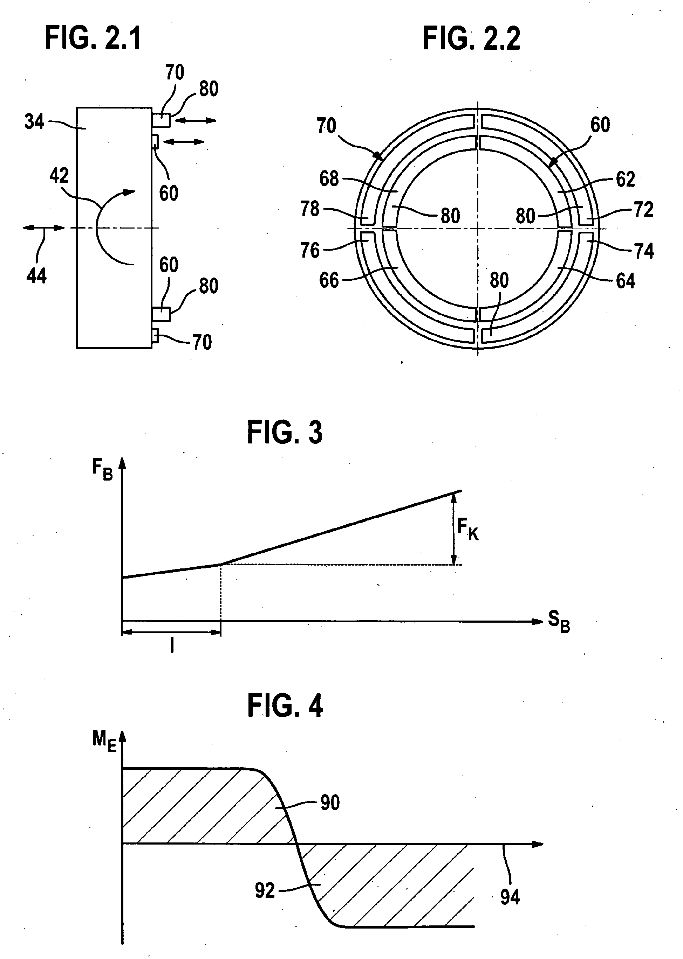

Um den erwähnten ersten elektrischen Antrieb 38, der für einen Umkuppelvorgang zwischen der ersten Kupplung 26 und der zweiten Kupplung 28 der Doppelkupplung 10 dient, zu entlasten, wird beim Umkuppeln eine der beiden Kupplungen 26 beziehungsweise 28 geöffnet und die verbleibende der beiden Kupplungen 26 beziehungsweise 28 gleichermaßen geschlossen. Die in der Kupplungsfeder 30,32 der zu Öffnenden der beiden Kupplungen 26 beziehungsweise 28 gespeicherte Federenergie wird genutzt, um diejenige der Kupplungsfedern 30, 32 zu spannen, welche der jeweils schließenden der beiden Kupplungen 26, 28 zugeordnet ist. Um diesen Vorgang optimal zu gestalten, werden die in den Figuren 2.1 und 2.2 dargestellten Laufflächen 80 der Erhebungskurven 60, 70 gemäß der folgenden Beziehung optimiert:

$$\frac{Energie\ddot{a}nderung}{Winkel\ Umkuppelmotor} = konst.$$

Dies bedeutet, dass der den Umkuppelvorgang zwischen den beiden Kupplungen 26, 28 der Doppelkupplung 10 des Doppelkupplungsgetriebes bewirkende erste elektrische Antrieb 38 um einen bestimmten Winkel verdreht wird, wodurch eine dementsprechende Energiemenge aufgewendet wird, um eine der beiden Kupplungen 26, 28 zu schließen. Gleichzeitig wird jedoch die gleiche Energiemenge aus dem Öffnungsvorgang der jeweils anderen der beiden Kupplungen 26, 28 frei. Dies bedeutet, dass abgesehen von der Systemreibung keine Energie benötigt wird, um den ersten elektrischen Antrieb 38 zu verdrehen.

Den Darstellungen gemäß der Figuren 2.1 und 2.2 sind eine Seiten- beziehungsweise eine Draufsicht auf den in Figur 1 schematisch dargestellten Kurvenkörper zu entnehmen.

Aus der Darstellung gemäß Figur 2.1 geht hervor, dass der Kurvenkörper 34 an seiner den Kupplungen 26 beziehungsweise 28 zuweisenden Stirnseiten eine außenliegend verlaufende zweite Erhebungskurve 70 und eine konzentrisch zu dieser angeordnete, jedoch weiter radial innenliegende erste Erhebungskurve 60 aufweist. Der Kurvenkörper 34 ist um die Antriebswelle 22 des ersten Teilgetriebes beziehungsweise die Antriebswelle 24 des zweiten Teilgetriebes um die Achse 42 rotatorisch bewegbar. Daneben ist der Kurvenkörper 34, wie in Figur 1 angedeutet, über eine Schiebehülse 36 in translatorische Richtung 44 verschiebbar. Aus der Seitenansicht gemäß Figur 2.1 geht hervor, dass die erste, innenliegende Erhebungskurve 60 zur Betätigung der ersten Kupplung 26 sowie die zweite Erhebungskurve 70 zur Betätigung der zweiten Kupplung 28 jeweils unterschiedliche Profilierungen aufweisen. In der Seitenansicht gemäß der Darstellung in Figur 2 ist die unterschiedliche Profilierung durch die unterschiedlichen Höhen der Laufflächen 80 angedeutet. Auf den Laufflächen 80 der ersten Erhebungskurve 60 beziehungsweise der zweiten Erhebungskurve 70 stützen sich über die erwähnten, z. B. kugelförmig ausbildbaren Übertragungselemente die erste Kupplungsfeder 30 beziehungsweise die zweite Kupplungsfeder 32 ab, wodurch die Kupplungskräfte beeinflussbar sind.

Aus der in Figur 2 dargestellten Draufsicht auf den Kurvenkörper 34 geht hervor, dass zur Verringerung der auftretenden Flächenpressungen die erste, innenliegende Erhebungskurve 60 zur Betätigung der ersten Kupplung 26 z. B. vier Kurvensegmente 62, 64, 66 und 68 aufweist. Analog umfasst die radial außenliegend angeordnete zweite Erhebungskurve 70 zur Betätigung der zweiten Kupplung 28 ebenfalls mehrere, z. B. vier Segmente, die durch die Bezugszeichen 72, 74, 76 und 78 kenntlich gemacht sind. Bevorzugt läuft auf jedem der Kurvensegmente 62, 64, 66 und 68 der ersten Erhebungskurve 60 jeweils ein z. B. kugelförmig ausbildbares Übertragungselement der ersten Kupplungsfeder 30 zur Betätigung der ersten Kupplung 26, während auf jedem der Kurvensegmente 72, 74, 76, 78 der zweiten, radial außenliegenden Erhebungskurve 70 ein z. B. kugelförmig ausbildbares Übertragungselement der zweiten Kupplungsfeder 32 zur Betätigung der zweiten Kupplung 28 abrollt. In der Draufsicht gemäß der Darstellung in Figur 2.2 sind die jeweiligen Laufflächen der einzelnen Segmente 62, 64, 66 und 68 der ersten Erhebungskurve 60 sowie die Kurvensegmente 72, 74, 76, 78 der zweiten, radial außenliegenden zweiten Erhebungskurve 70 mit Bezugszeichen 80 belegt. Die Erhebungskurven 60 und 70 sind entgegengesetzt orientiert, so dass die höchsten Erhebungen der Kurve 60 jeweils den niedrigsten Erhebungen der Kurve 70 gegenüberstehen und umgekehrt.

Der Darstellung gemäß Figur 3 ist der Verlauf der Betätigungskraft einer Kupplung aufgetragen über den Betätigungsweg der Kupplungsfeder zu entnehmen.

In der Darstellung gemäß Figur 3 ist die jeweilige Betätigungskraft einer der beiden Kupplungen 26 beziehungsweise 28 durch $F_B$ bezeichnet. Der Betätigungsweg der jeweiligen Kupplungsfeder 30, 32 ist durch $s_B$ dargestellt. Um bei einem Umkupplungsvorgang von einer der Kupplungen 26 oder 28 auf die jeweils andere die in der Kupplungsfedern 30 oder 32 der jeweils geschlossenen Kupplung gespeicherte Energie möglichst vollständig nutzen zu können und um auf diese Weise die aufzuwendende Energie in den Elektromotoren 38 und 40 zu minimieren, werden die Kupplungsfedern 30 und 32 vorgespannt. Dies bedeutet, dass die Kupplungsfedern 30 und 32 selbst bei vollständig geöffnet stehenden Kupplungen 26 und 28 eine Kraft auf den Kurvenkörper 34 aufbringen. Dies wird entweder durch eine zusätzliche Vorspannfeder 112 oder durch eine geeignete Gestaltung und Einspannung der Kupplungsfedern 30 und 32 erreicht. Die Charakteristik der Vorspannfeder 112 oder auch mehrerer Vorspannfedern 112 beziehungsweise der Gestaltung und der Einspannung der Kupplungsfedern 30 und 32 bestimmt den Kraftverlauf im Leerweg 1 bis zum Anlagepunkt der Kupplungen 26 und 28, in dem die Kupplungen 26, 28 beginnen, Drehmoment zu, übertragen. Der sich anschließende Kraftanstieg bis zum vollständigen Schließen der Kupplung wird von der Gestaltung der Kupplungsfedern 30, 32 bestimmt.

Die Darstellung gemäß Figur 4 zeigt eine mögliche Variation des Verlaufs des Drehmomentes am für den Umkupplungsvorgang vorgesehenen elektrischen Antrieb gegenüber der zuvor beschriebenen Auslegungsvariante.

In der Darstellung gemäß Figur 4 ist eine Variante für das Drehmoment $M_E$ des für den Umkupplungsvorgang vorgesehenen ersten elektrischen Antriebes 38 über den Drehwinkel 94 des ersten elektrischen Antriebes 38 aufgetragen. Durch die einwirkenden Federkräfte wird der Kurvenkörper 34 unter Voraussetzung einer nicht selbsthemmenden Kopplung zum ersten elektrischen Antrieb 38 im unbestromten Zustand dieses Antriebes in eine der Endstellungen des Drehwinkels 94 bewegt. Dies wird dadurch erreicht, dass der Verlauf beziehungsweise die Profilierung der Erhebungskurven 60, 70 beziehungsweise von deren Kurvensegmenten 62, 64, 66 und 68 oder 72, 74, 76 und 78 abweichend vom oben beschriebenen Ansatz modifiziert wird. Die Energieänderung $\Delta E$ über den Drehwinkel 94 ist in diesem Falle nicht mehr konstant. Es stellt sich vielmehr, wie in Figur 4 angedeutet, ein rampenförmiger Übergang zwischen dem Antriebsbereich 29 und dem Mitnahmebereich 92 in Bezug auf den ersten elektrischen Antrieb 38 ein, während beim Ansatz:

$$\frac{Energie\ddot{a}nderung}{Winkel\ Umkuppelmotor} = konst.$$

die Energieänderung $\Delta E$ über den Drehwinkel 94 einer horizontalen Geraden entspricht.

Das Drehmoment $M_E$, welches über diese Modifikation der ersten und zweiten Erhebungskurve 60 beziehungsweise 70 eingestellt wird, ist bevorzugt größer als das Reibmoment, welches durch die Kupplungen 26 beziehungsweise 28 erzeugt wird, um ein zuverlässiges Weiter- oder Rückdrehen des Kurvenkörpers 34 ohne Betätigung durch den ersten elektrischen Antrieb 38 sicherzustellen. Dadurch ist gewährleistet, dass zu jedem Zeitpunkt ein definierter, sicherer Zustand angefahren wird, in dem eine der beiden Kupplungen 26, 28 vollständig geöffnet ist und die jeweils andere der beiden Kupplungen 26, 28 der Doppelkupplung 10 ein definiertes Drehmoment überträgt. In diesem Zusammenhang wird darauf verwiesen, dass das Öffnen beider Kupplungen 26 und 28 und somit auch der Anfahrvorgang dadurch geregelt werden kann, dass der Kurvenkörper 34 durch den zweiten, weiteren elektrischen Antrieb 40 in Translationsrichtung 44 verfahren wird. Insbesondere lässt sich die Last von beiden Kupplungen 26, 28 entfernen, wenn der Kurvenkörper 34 in translatorische Richtung 44 von den Kupplungsfedern 30 beziehungsweise 32 weggezogen wird.

Es ist jedoch auch möglich, den Kurvenkörper 34 auf den Kupplungsblock 18 zuzufahren und auf diese Weise die übertragbaren Drehmomente an beiden Kupplungen 26 beziehungsweise 28 gleichmäßig zu erhöhen. Durch die Betätigung beider elektrischen Antriebe 38, 40 ist es somit möglich, den über die erste Erhebungskurve 60 beziehungsweise die zweite Erhebungskurve 70 fest vorgegebenen Verlauf des Umkuppelvorgangs hinsichtlich einer Überschneidungsschaltung zu variieren und dem Fahrzustand des Fahrzeugs entsprechend zu regeln.

Aus der Darstellung gemäß Figur 4 geht hervor, dass ab einem bestimmten Winkel des ersten für den Umkupplungsvorgang eingesetzten elektrischen Antriebs 38 dieser vom Antriebsmodus 90 in einen Mitnahmemodus 92 übergeht. Innerhalb des Mitnahmemodus' 92 treibt der erste elektrische Antrieb 38 nicht mehr an, sondern wird mitgeschleppt.

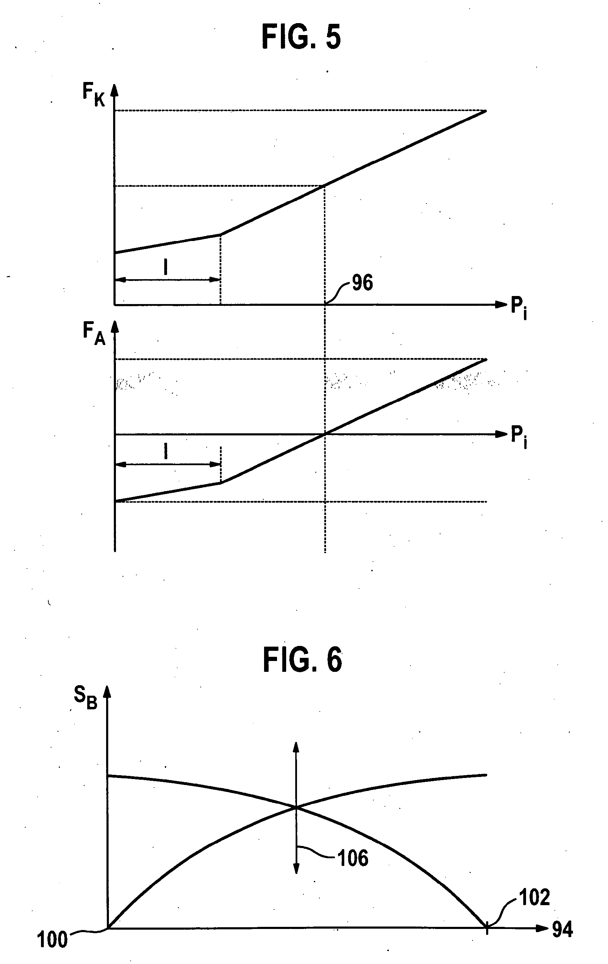

In der Darstellung gemäß Figur 5 sind die Verläufe der Kupplungskraft $F_K$ und der Aktorkraft $F_A$ jeweils über die translatorische Position des Kurvenkörpers aufgetragen.

In den in Figur 5 dargestellten Diagrammen sind die Kupplungskraft $F_K$ beziehungsweise die Aktorkraft $F_A$ aufgetragen über verschiedene translatorische Positionen $P_i$ des Kurvenkörpers 34, die entsprechend der durch den weiteren zweiten elektrischen Antrieb 40 angesteuerten Position erhalten werden. Aus dem Verlauf der Kupplungskraft $F_K$ über die translatorischen Positionen $P_i$ des Kurvenkörpers 34 geht hervor, dass eine signifikante Steigerung der Kupplungskraft $F_K$ nach Durchfahren des Leerweges 1 erhalten wird. Durch Bezugszeichen 96 ist eine Grundstellung des Kurvenkörpers 34 bezeichnet. Ausgehend von der durch Bezugszeichen 96 dargestellten Grundstellung lässt sich bei einer Translationsbewegung 44 des Kurvenkörpers 34 über die Schieberhülse 36 (vergleiche Darstellung gemäß Figur 1) eine Abnahme oder eine Zunahme der Kupplungskraft $F_K$ erreichen. Je nachdem, in welche Drehrichtung der zweite, weitere elektrische Antrieb 40 zur translatorischen Verstellung der Schieberhülse 36 und damit des Kurvenkörpers 34 betrieben wird, können auch negative Aktorkräfte $F_A$ auftreten. Die Darstellung in Figur 5 zeigt, dass durch die Einführung einer Grundstellung 96 die Aktorkräfte gesenkt werden und somit eine Entlastung des weiteren, zweiten elektrischen Antriebs 40 dadurch erreicht wird. Im unbestromten Zustand des weiteren, zweiten elektrischen Antriebes 40 wird der Kurvenkörper 34 translatorisch die definierte Grundstellung 96 anfahren. Der weitere, zweite elektrische Antrieb 40 bringt in diesem Falle nicht mehr die volle Kupplungskraft $F_K$ auf, sondern nur noch den Kraftanteil in der Grundstellung 96, der zum Öffnen erforderlich ist, sowie den Kraftanteil der zur Übertragung des vollen Kupplungsmomentes erforderlich ist. Die Grundstellung 96 wird durch das Kräfteverhältnis zwischen den Kupplungsfedern 30 und 32 sowie mindestens einer Vorspannfeder 112 eingestellt.

Darüber hinaus ist es sinnvoll, wenn in der translatorischen Grundstellung, dargestellt durch Bezugszeichen 96 des Kurvenkörpers 34, nicht das volle Drehmoment übertragen wird. Die wirkenden Kräfte in dem Doppelkupplungsgetriebe sind im Normalbetrieb geringer, ebenso der Energiebedarf für die beiden elektrischen Antriebe 38 beziehungsweise 40. Im eher selten auftretenden Volllastbetrieb, bei dem das volle Drehmoment übertragen werden muss, kann in diesem Falle Kupplungskraft $F_K$ über ein translatorisches Verfahren in Translationsrichtung 44 durch den Kurvenkörper 34 mittels des weiteren zweiten elektrischen Antriebs 40 erhöht werden. Durch die mittels einer Vorspannfeder 112 erreichbare Grundstellung 96 des Kurvenkörpers 34 wird sichergestellt, dass sich die gesamte Kupplungsaktuatorik im unbestromten Zustand sowohl des ersten elektrischen Antriebes 38 als auch des zweiten elektrischen Antriebes 40 in einem von zwei definierten sicheren Zuständen befindet: entweder steht die erste Kupplung 26 offen und die zweite Kupplung 28 überträgt das definierte Drehmoment oder die zweite Kupplung 28 steht offen, während die erste Kupplung 26 das definierte Drehmoment überträgt.

Der Darstellung gemäß Figur 6 ist ein Beispiel für den Verlauf der Erhebungskurven gemäß der Figuren 2.1 und 2.2 zu entnehmen.

Aus der Darstellung gemäß Figur 6 geht hervor, dass in der Endposition 100 die Kupplung 26 geöffnet und die Kupplung 28 geschlossen ist, während in der Endposition 102 umgekehrte Verhältnisse herrschen. Wird nun der Kurvenkörper 34 durch eine Drehung 94 des ersten elektrischen Antriebes 38 gedreht, wird jeweils eine der beiden Kupplungen 26 oder 28 geschlossen, während die jeweils andere der beiden Kupplungen 26, 28 der Doppelkupplung 10 geöffnet wird. Über die Bewegung entlang der Richtung 94 wird somit das übertragene Drehmoment des Doppelkupplungsgetriebes von der ersten Kupplung 26 auf die zweite Kupplung 28 übertragen oder umgekehrt. Dieser vorgegebene Verlauf kann durch Verschiebung des Kurvenkörpers 34 in Translationsrichtung 44 mittels des zweiten elektrischen Antriebes 40 entlang der Bewegungsrichtung 106 variiert werden.

## Patentansprüche

1. Doppelkupplung (10) für ein Doppelkupplungsgetriebe mit einer ersten Kupplung (26) und einer zweiten Kupplung (28) und mit einem ersten elektrischen Steller (38) und einem zweiten elektrischen Steller (40), **dadurch gekennzeichnet, dass** der erste elektrische Steller (38) auf einen beide Kupplungen (26, 28) betätigenden Kurvenkörper (34) wirkt und einen Umkupplungsvorgang zwischen der ersten und zweiten Kupplung (26, 28) des Doppelkupplungsgetriebes steuert.

2. Doppelkupplung gemäß Anspruch 1, **dadurch gekennzeichnet, dass** der ersten Kupplung (26) eine erste Kupplungsfeder (30) und der zweiten Kupplung (28) eine zweite Kupplungsfeder (32) zugeordnet sind, wobei während des Umkupplungsvorganges die gespeicherte Federenergie in der Kupplungsfeder (30,32) der Öffnenden der beiden Kupplungen (26, 28) die Kupplungsfeder (30, 32) der Schließenden der beiden Kupplungen (26, 28) spannt.

3. Doppelkupplung gemäß Anspruch 1, **dadurch gekennzeichnet, dass** der auf einer Antriebswelle (22) für ein erstes Teilgetriebe aufgenommene Kurvenkörper (34) mittels mindestens einer Vorspannfeder (112) vorgespannt ist, welche den Kurvenkörper (34) in eine Grundstellung (96) bewegt.

4. Doppelkupplung gemäß Anspruch 1, **dadurch gekennzeichnet, dass** der Kurvenkörper (34) mittels des ersten elektrischen Stellers (38) rotatorisch (42) und mittels des weiteren, zweiten elektrischen Stellers (40) translatorisch (44) bewegbar ist.

5. Doppelkupplung gemäß Anspruch 4, **dadurch gekennzeichnet, dass** die KupplungsKräfte $F_K$ des Doppelkupplungsgetriebes bei einer translatorischen Bewegung (44) des Kurvenkörpers (34) erhöht werden.

6. Doppelkupplung gemäß Anspruch 1, **dadurch gekennzeichnet, dass** der Kurvenkörper (34) eine der ersten Kupplung (26) zugeordnete erste Erhebungskurve (60) und eine der zweiten Kupplung (28) zugeordnete zweite Erhebungskurve (70) aufweist.

7. Doppelkupplung gemäß Anspruch 6, **dadurch gekennzeichnet, dass** die Erhebungskurven (60, 70) jeweils mehrere Segmente (62, 64, 66, 68; 72, 74, 76, 78) aufweisen.

8. Doppelkupplung gemäß Anspruch 1, **dadurch gekennzeichnet, dass** der zweite, weitere elektrische Steller (40) ausgehend von einer translatorischen Grundstellung (96) des Kurvenkörpers (34) entlang seines Betätigungsweges $s_B$ die Öffnungskraft zum Öffnen einer der beiden Kupplungen (26, 28) oder den zur Übertragung des vollen Drehmomentes fehlenden Anteils der Kupplungskraft $F_K$ aufbringt.

9. Doppelkupplung gemäß Anspruch 1, **dadurch gekennzeichnet, dass** bei Ausfall der elektrischen Steller (38, 40) eine der beiden Kupplungen (26, 28) öffnet und die andere der beiden Kupplungen (26, 28) so weit schließt, dass eine definierte Kupplungskraft $F_K$ zur Übertragung eines definierten Drehmomentes einer Verbrennungskraftmaschine (12) auf den Antriebsstrang des Fahrzeugs vorliegt.

10. Doppelkupplung gemäß Anspruch 3; **dadurch gekennzeichnet, dass** die in der Grundstellung (96) wirkende Kupplungskraft $F_K$ durch mindestens eine Vorspannfeder (112) eingestellt wird.

11. Doppelkupplung gemäß Anspruch 6, **dadurch gekennzeichnet, dass** die Erhebungskurven (60, 70) derart gestaltet sind, dass die erforderliche Betätigungsenergie minimiert wird, indem die erforderliche Kraft zum Schließen einer der Kupplungen (26, 28) von der Öffnungskraft der jeweils anderen Kupplung aufgebracht wird.

**EP 1 989 462 B1**

**12.** Doppelkupplung gemäß Anspruch 6, **dadurch gekennzeichnet, dass** die Erhebungskurven (60, 70) so gestaltet sind, dass sich für die Bewegung des Kurvenkörpers (34) zwei stabile Endstellungen (100, 102) ergeben.

## Claims

**1.** Double clutch (10) for a double-clutch transmission, having a first clutch (26) and a second clutch (28) and having a first electric actuator (38) and a second electric actuator (40), **characterized in that** the first electric actuator (38) acts on a cam body (34) which operates both clutches (26, 28), and said first electric actuator (38) controls a clutch changeover process between the first and second clutches (26, 28) of the double clutch transmission.

**2.** Double clutch according to Claim 1, **characterized in that** the first clutch (26) is assigned a first clutch spring (30) and the second clutch (28) is assigned a second clutch spring (32), wherein the stored spring energy in the clutch spring (30, 32) of the opening one of the two clutches (26, 28) stresses the clutch spring (30, 32) of the closing one of the two clutches (26, 28) during the clutch changeover process.

**3.** Double clutch according to Claim 1, **characterized in that** the cam body (34), which is held on a driveshaft (22) for a first partial transmission, is preloaded by means of at least one preload spring (112) which moves the cam body (34) into a basic position (96).

**4.** Double clutch according to Claim 1, **characterized in that** the cam body (34) can be moved in rotation (42) by means of the first electric actuator (38) and in translation (44) by means of the further, second electric actuator (40).

**5.** Double clutch according to Claim 4, **characterized in that** the clutch forces $F_K$ of the double clutch transmission are increased during a translatory movement (44) of the cam body (34).

**6.** Double clutch according to Claim 1, **characterized in that** the cam body (34) has a first elevation cam (60) assigned to the first clutch (26) and a second elevation cam (70) assigned to the second clutch (28).

**7.** Double clutch according to Claim 6, **characterized in that** the elevation cams (60, 70) have in each case a plurality of segments (62, 64, 66, 68; 72, 74, 76, 78).

**8.** Double clutch according to Claim 1, **characterized in that** the second, further electric actuator (40), proceeding from a translatory basic position (96) of the cam body (34) along its actuating path $s_B$, imparts the opening force for opening one of the two clutches (26, 28) or imparts the missing component of the clutch force $F_K$ for transmitting the full torque.

**9.** Double clutch according to Claim 1, **characterized in that**, in the event of failure of the electric actuators (38, 40), one of the two clutches (26, 28) opens and the other of the two clutches (26, 28) closes to such an extent that a defined clutch force $F_K$ for transmitting a defined torque of an internal combustion engine (12) to the drivetrain of the vehicle is present.

**10.** Double clutch according to Claim 3, **characterized in that** the clutch force $F_K$ which acts in the basic position (96) is set by means of at least one preload spring (112).

**11.** Double clutch according to Claim 6, **characterized in that** the elevation cams (60, 70) are designed such that the required actuation energy is minimized by virtue of the force required for closing one of the clutches (26, 28) being imparted by the opening force of the in each case other clutch.

**12.** Double clutch according to Claim 6, **characterized in that** the elevation cams (60, 70) are designed so as to generate two stable end positions (100, 102) for the movement of the cam body (34).

## Revendications

**1.** Double embrayage (10) pour une transmission à double embrayage, comprenant un premier embrayage (26) et un deuxième embrayage (28) et un premier actionneur électrique (38) et un deuxième actionneur électrique (40), **caractérisé en ce que** le premier actionneur électrique (38) agit sur un corps de came (34) actionnant les deux embrayages (26, 28), et commande une opération de transfert entre le premier et le deuxième embrayage (26, 28) de la transmission à double embrayage.

2. Double embrayage selon la revendication 1, **caractérisé en ce qu'**un premier ressort d'embrayage (30) est associé au premier embrayage (26) et un deuxième ressort d'embrayage (32) est associé au deuxième embrayage (28), dans lequel pendant l'opération de transfert l'énergie de ressort accumulée dans le ressort d'embrayage (30, 32) de celui qui s'ouvre parmi les deux embrayages (26, 28) serre le ressort d'embrayage (30, 32) de celui qui se ferme parmi les deux embrayages (26, 28).

3. Double embrayage selon la revendication 1, **caractérisé en ce que** le corps de came (34) reçu sur un arbre d'entraînement (22) pour une première transmission partielle est précontraint au moyen d'au moins un ressort de précontrainte (112), qui déplace le corps de came (34) dans une position de base (96).

4. Double embrayage selon la revendication 1, **caractérisé en ce que** le corps de came (34) peut être déplacé en rotation (42) au moyen du premier actionneur électrique (38) et en translation (44) au moyen du deuxième actionneur électrique (40) supplémentaire.

5. Double embrayage selon la revendication 4, **caractérisé en ce que** les forces d'embrayage $F_K$ de la transmission à double embrayage sont augmentées lors d'un déplacement en translation (44) du corps de came (34).

6. Double embrayage selon la revendication 1, **caractérisé en ce que** le corps de came (34) présente une première came de levée (60) associée au premier embrayage (26) et une deuxième came de levée (70) associée au deuxième embrayage (28).

7. Double embrayage selon la revendication 6, **caractérisé en ce que** les cames de levée (60, 70) présentent chacune plusieurs segments (62, 64, 66, 68 ; 72, 74, 76, 78).

8. Double embrayage selon la revendication 1, **caractérisé en ce que** le deuxième actionneur électrique (40) supplémentaire, partant d'une position de base de translation (96) du corps de came (34) le long de sa course d'actionnement $s_B$, fournit la force d'ouverture pour l'ouverture de l'un des deux embrayages (26, 28) ou la proportion de la force d'embrayage $F_k$ manquant pour le transfert du couple total.

9. Double embrayage selon la revendication 1, **caractérisé en ce qu'**en cas de panne des actionneurs électriques (38, 40), l'un des deux embrayages (26, 28) s'ouvre et l'autre des deux embrayages (26, 28) se ferme dans une mesure telle qu'il existe une force d'embrayage définie $F_K$ pour le transfert d'un couple défini d'un moteur à combustion interne (12) à la chaîne cinématique du véhicule.

10. Double embrayage selon la revendication 3, **caractérisé en ce que** la force d'embrayage $F_K$ agissant dans la position de base (96) est ajustée par au moins un ressort de précontrainte (112).

11. Double embrayage selon la revendication 6, **caractérisé en ce que** les cames de levée (60, 70) sont configurées de telle sorte que l'énergie d'actionnement requise soit minimisée, **en ce que** la force requise pour fermer l'un des embrayages (26, 28) est appliquée par la force d'ouverture de l'autre embrayage respectif.

12. Double embrayage selon la revendication 6, **caractérisé en ce que** les cames de levée (60, 70) sont configurées de telle sorte que l'on obtienne deux positions stables (100, 102) pour le déplacement du corps de came (34).

## FIG. 1

## FIG. 2.1

## FIG. 2.2

## FIG. 3

## FIG. 4

## FIG. 5

## FIG. 6

**EP 1 989 462 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19903554 C2
- US 6292732 B1
- US 20050205376 A1